# EUROPÄISCHE PATENTSCHRIFT

(11) **EP 0 635 153 B1**
(45) Veröffentlichungstag und Bekanntmachung des Hinweises auf die Patenterteilung: **13.05.1998**
(21) Anmeldenummer: 94905671.7
(22) Anmeldetag: 21.01.1994
(51) Int. Cl.: G07C 5/08, G01P 1/12

(54) **UNFALLDATENSPEICHER**
ACCIDENT DATA MEMORY
MEMOIRE POUR DONNEES D'ACCIDENTS

(30) Priorität: 06.02.1993 DE 4303470
(43) Veröffentlichungstag der Anmeldung: 25.01.1995
(73) Patentinhaber: Mannesmann VDO AG, 60326 Frankfurt (DE)
(72) Erfinder: GRULER, Martin, D-78554 Aixheim (DE); BACIC, Helmut, D-78126 Königsfeld (DE); SALOMONSSON, Ove, S-56027 Tenhult (SE)
(86) Internationale Anmeldenummer: EP9400152
(87) Internationale Veröffentlichungsnummer: WO9418645

(56) Entgegenhaltungen:
- EP-A- 0 118 818
- WO-A-91/17447
- DE-A- 3 314 036
- DE-A- 3 643 203
- DE-A- 4 136 968
- FR-A- 2 615 624
- US-A- 4 992 943

## Beschreibung

Die Erfindung betrifft einen Unfalldatenspeicher gemäß dem Oberbegriff des Anspruchs 1. Unfalldatenspeicher sind in ihrem Aufbau als solche bekannt.

Der Zweck eines Unfalldatenspeichers besteht in der Erfassung und Registrierung von Daten, die für die objektive Klärung der Schuldfrage nach einem Unfallereignis sachdienlich sind. Es ist Stand der Technik, die Bewegungsdaten sowie die Zustandsdaten einiger Fahrzeugaggregate während des Fahrbetriebs des mit einem Unfalldatenspeicher ausgerüsteten Fahrzeugs zu registrieren. Im Unfalldatenspeicher gemäß der EP 0 118 818 B1 endet die Datenaufzeichnung mit dem Fahrzeugstillstand.

Die Detektion eines Unfallereignisses erfolgt üblicherweise zumindest durch eine Auswertung der vom Unfalldatenspeicher erfaßten Beschleunigungssignale. Da Straßenunebenheiten, die normale Fahrdynamik oder das Zuschlagen einer Fahrzeugtür nicht zur Auslösung der speziell für eine Unfallsituation vorgesehenen Speicherverfahren führen dürfen, weisen die bekannten Unfalldatenspeicher Auslösekriterien auf, die die Registrierung von kleineren "Rempeleien" nicht gestatten. Wird ein parkendes Fahrzeug zB bei dem Rangiermanöver eines Fremdfahrzeugs angefahren, kann ein derartiger Unfall von den bisher bekannten Unfalldatenspeichern nicht registriert werden.

Die Aufgabe der vorliegenden Erfindung ist es, diesen Nachteil zu beseitigen. Sie wird durch die Merkmale des ersten Anspruchs gelöst. Die weiteren Ansprüche zeigen vorteilhafte Weiterbildungen.

Erfindungsgemäß wird vorgeschlagen, zusätzlich zu den während des Fahrbetriebs erforderlichen höheren Ansprechschwellen für die Auslösung der speziell zur unlöschbaren Registrierung einer Unfallsituation vorgesehenen Speicherverfahren Mittel vorzusehen, die die Betriebsbereitschaft des Unfalldatenspeichers nach dem Ausschalten des Antriebsaggregats des Fahrzeugs für eine begrenzte Zeit mit einer erhöhten Empfindlichkeit für die Detektion und Registrierung von Unfallereignissen fortzusetzen.

Die Erhöhung der Empfindlichkeit kann dadurch erfolgen, daß der zur Auslösung der Unfallregistrierung festgesetzte Schwellwert der Amplitude der Beschleunigungssignale um etwa 90 % herabgesetzt wird bei gleichzeitiger Verlängerung des Betrachtungszeitraums der zur Auslösung führenden Einwirkungsdauer des Beschleunigungssignals. Dadurch, daß der Unfalldatenspeicher mit Mitteln zur Durchführung dieser Maßnahme erweitert wird, werden am geparkten Fahrzeug auch leichte Stöße detektierbar.

Um Fehlauslösungen zu vermeiden, ist eine Umschaltung des Unfalldatenspeichers auf diese erhöhte Empfindlichkeit nur bei stillstehendem Fahrzeug sinnvoll. Zur Steuerung der Umschaltung benötigt der Unfalldatenspeicher die Information darüber, in welchem Betriebszustand sich das Antriebsaggregat des Fahrzeugs befindet. Diese Abfrage erfolgt vorzugsweise über eine Erfassung der Schaltstellung des Zündstartschalters des Fahrzeugs.

Um Fehlauslösungen unmittelbar nach dem Ausschalten des Antriebsaggregats des Fahrzeugs zu vermeiden, die beispielsweise durch das Verlassen des Fahrzeugs durch die Fahrzeuginsassen oder das Entladen des Fahrzeugs hervorgerufen werden könnten, empfiehlt es sich, die Umschaltung auf die erhöhte Empfindlichkeit zeitverzögert durchzuführen. Eine Verzögerung von ca. 5 Minuten erscheint im allgemeinen praxisgerecht. Dadurch kann sichergestellt werden, daß sich das Fahrzeug in Ruhe befindet.

Um ermittlungsdienliche Aussagen zum Unfallereignis machen zu können, ist es vorteilhaft, den erfindungsgemäß erweiterten Unfalldatenspeicher mit Zeitzählmitteln auszustatten, so daß der Unfallzeitpunkt genau bestimmt werden kann. Die Zeitzählmittel können in einer als vollständiges Kalendarium ausgebildeten Echtzeituhr oder nur aus einem Relativzeitmesser bestehen. In jedem Fall kann auf diese Weise zusätzlich zu den durch die Beschleunigungssignale erfaßten Stoßdaten eine Zeitmarke in dem registrierten Datensatz abgelegt werden.

## Patentansprüche

1. Unfalldatenspeicher
a) mit Mitteln zur Erfassung von Beschleunigungssignalen,
b) mit Mitteln zur Analyse der erfaßten Beschleunigungssignale hinsichtlich ihrer Amplitude und ihrer Einwirkungsdauer für die Detektion einer Unfallsituation,
c) mit Mitteln zur Abfrage des Betriebszustandes des Antriebsaggregats des Fahrzeugs, in welchem der Unfalldatenspeicher installiert ist, und
d) mit Mitteln zur Speicherung der erfaßten Signale und/oder der daraus ermittelten Daten,
gekennzeichnet durch Mittel, die den Unfalldatenspeicher nach dem Ausschalten des Antriebsaggregats des Fahrzeugs für eine begrenzte Zeit mit einer gegenüber dem Zustand des eingeschalteten Antriebsaggregats erhöhten Empfindlichkeit in einer fortdauernden Bereitschaft für die Detektion und Registrierung einer Unfallsituation aktiv erhalten.

2. Unfalldatenspeicher nach Anspruch 1,
dadurch gekennzeichnet,
daß die Erfassung des Betriebszustandes des Antriebsaggregats des Fahrzeugs durch eine Abfrage der Schaltstellung des Zündstartschalters erfolgt.

3. Unfalldatenspeicher nach Anspruch 1 oder 2,
dadurch gekennzeichnet,
daß die Umschaltung in die erhöhte Empfindlichkeit für die Detektion und Registrierung einer Unfallsituation zeitverzögert nach dem Ausschalten des Antriebsaggregats des Fahrzeugs erfolgt.

4. Unfalldatenspeicher nach Anspruch 1, 2 oder 3,
dadurch gekennzeichnet,
daß die nach dem Ausschalten des Antriebsaggregats des Fahrzeugs fortdauernd betriebsbereiten Mittel zur Detektion und Registrierung einer Unfallsituation zur Registrierung des Zeitpunktes eines Unfallereignisses mit Zeitzählmitteln ausgestattet sind.

## Claims

1. Accident data recorder
a) having means for the acquisition of acceleration signals,
b) having means for the analysis of the acquired acceleration signals with regard to their amplitude and their duration of action for the detection of an accident situation,
c) having means for the interrogation of the operating state of the drive assembly of the vehicle in which the accident data recorder is installed, and
d) having means for the storage of the acquired signals and/or of the data determined therefrom,
characterized by means which, after the vehicle's drive assembly has been switched off, maintain the accident data recorder active in a continuing state of readiness for the detection and recording of an accident situation for a limited time at a sensitivity which is increased in comparison with the state of the switched-on drive assembly.

2. Accident data recorder according to Claim 1, characterized in that the detection of the operating state of the vehicle's drive assembly is effected by an interrogation of the position of the ignition starter switch.

3. Accident data recorder according to Claim 1 or 2, characterized in that the switching-over to the increased sensitivity to the detection and recording of an accident situation is effected in a time-delayed manner after the vehicle's drive assembly has been switched off.

4. Accident data recorder according to Claim 1, 2 or 3, characterized in that the means for the detection and recording of an accident situation which are in a continuing state of readiness after the vehicle's drive assembly has been switched off are equipped with time-counting means for recording the time of the accident occurrence.

## Revendications

1. Mémoire de données d'accident
a) avec des moyens pour l'acquisition de signaux d'accélération,
b) avec des moyens pour l'analyse des signaux d'accélération acquis en ce qui concerne leur amplitude et leur durée d'action pour la détection d'une situation d'accident,
c) avec des moyens pour l'interrogation de l'état de fonctionnement du groupe moto-propulseur du véhicule dans lequel est installée la mémoire de données d'accident et
d) avec des moyens pour la mémorisation des signaux acquis et/ou des données en découlant,
caractérisée par des moyens qui, après la mise à l'arrêt du groupe moto-propulseur du véhicule, maintiennent la mémoire de données d'accident en activité pour une durée limitée, avec une sensibilité accrue par rapport à l'état du groupe moto-propulseur en marche, dans un état de veille continu pour la détection et l'enregistrement d'une situation d'accident

2. Mémoire de données d'accident selon la revendication 1,
caractérisé par le fait que la détection de l'état de fonctionnement du groupe moto-propulseur du véhicule est obtenue par l'interrogation de la position de commutation de la clé de contact.

3. Mémoire de données d'accident selon l'une quelconque des revendications 1 ou 2,
caractérisée par le fait
que la commutation sur la sensibilité accrue pour la détection et l'enregistrement d'une situation d'accident a lieu avec une temporisation après la mise à l'arrêt du groupe moto-propulseur du véhicule.

4. Mémoire de données d'accident selon l'une quelconque des revendications 1, 2 ou 3,
caractérisée par le fait
que les moyens mis, après la mise à l'arrêt du groupe moto-propulseur du véhicule, dans un état de veille continu pour la détection et l'enregistrement d'une situation d'accident sont équipés de moyens de comptage de temps pour l'enregistrement de l'instant d'un événement d'accident.
